(19) **Europäisches Patentamt**

**European Patent Office**

**Office européen des brevets**

(11) **EP 0 936 386 B1**

(12) **FASCICULE DE BREVET EUROPEEN**

(45) Date de publication et mention
de la délivrance du brevet:
**16.07.2003 Bulletin 2003/29**

(51) Int Cl.⁷: **F16H 61/14**

(21) Numéro de dépôt: **99400320.0**

(22) Date de dépôt: **11.02.1999**

(54) **Procédé et dispositif de pilotage d'un embrayage de pontage de convertisseur**

Verfahren und Vorrichtung zur Steuerung der Überbrückungskupplung eines Drehmomentenwandlers

Method and device for the control of a torque converter lock-up clutch

(84) Etats contractants désignés:
**DE ES GB IT**

(30) Priorité: **12.02.1998 FR 9801670**

(43) Date de publication de la demande:
**18.08.1999 Bulletin 1999/33**

(73) Titulaire: **Renault s.a.s.**
**92100 Boulogne Billancourt (FR)**

(72) Inventeurs:
• **Leorat, François**
**78000 Versailles (FR)**
• **Nunes, Antoine**
**94270 Le Kremlin Bicetre (FR)**
• **Valentin, Daniel**
**92500 Rueil Malmaison (FR)**

(56) Documents cités:
**EP-A- 0 417 666      GB-A- 2 081 413**
**US-A- 4 998 604**

# Description

La présente invention se rapporte au pilotage hydraulique des transmissions automatiques.

Plus précisément, elle concerne un procédé et un dispositif de pilotage d'un embrayage de pontage de transmission automatique.

Pour optimiser la consommation des véhicules équipés de boîtes de vitesses automatiques étagées (BVA) ou à variation continue (CVT), équipées d'un convertisseur de couple, il est connu de munir le convertisseur de couple d'un embrayage de pontage entre l'impulseur et la turbine de ce dernier. Cet embrayage permet, lorsqu'il est fermé hors des phases de conversion, d'annuler le glissement du convertisseur, et d'améliorer d'autant le rendement de la transmission. Néanmoins, le fait de ponter le convertisseur supprime l'effet bénéfique de filtrage des acyclismes moteur, filtrage que procure tout naturellement le convertisseur. Il en résulte que le pontage du convertisseur induit, si l'on ne prend pas les contremesures indispensables, un risque important d'apparition de vibrations indésirables dans la chaîne cinématique.

Les vibrations peuvent être combattues par l'interposition d'un moyeu amortisseur, plus ou moins sophistiqué et encombrant, ou, d'une manière qui tend à se développer, en autorisant l'embrayage de pontage à glisser de façon soigneusement contrôlée dans certaines conditions de couple et de vitesse moteur.

Dans la totalité des applications, le pilotage de ce glissement s'opère au moyen d'un système de contrôle électrohydraulique complexe supervisé par le calculateur électronique de la BVA ou du CVT, prenant notamment en compte, comme grandeurs d'entrée, le couple $C_m$ et la vitesse moteur $\omega_m$, la vitesse turbine la température température du fluide de travail de la BVA, etc.... A partir de ces données mesurées, le calculateur élabore une consigne de glissement ($\omega_m - \omega_t$), et c'est en régulant la pression de serrage de l'embrayage de pontage du convertisseur au moyen d'un système électrohydraulique piloté, que l'on s'efforce de respecter cette consigne de glissement : en régime de glissement, l'embrayage de pontage fonctionne comme un limiteur de couple, et ce faisant, lisse efficacement les irrégularités du couple moteur, permettant ainsi d'atteindre les prestations acoustiques souhaitées.

Les systèmes électrohydrauliques les plus couramment utilisés pour régler la pression de serrage de l'embrayage de pontage, comportent généralement un tiroir hydraulique commandé par une électrovanne tout ou rien qui distingue les états «ponté» et «déponté», et un tiroir de régulation commandé par une électrovanne modulante, qui élabore, partir d'une pression de référence, la pression de commande recherchée. L'électrovanne modulante est elle-même activée par un signal approprié, délivré par le calculateur de la BVA. Un tel système est à la fois cher et encombrant, puisqu'il nécessite deux électrovannes.

Par la publication GB 2081413, on connaît un procédé de pilotage d'un embrayage de convertisseur de couple de transmission automatique, selon lequel une électrovanne commande le pontage ou le dépontage du convertisseur, ainsi que la régulation de la pression de pilotage correspondante.

La publication US 4998 604 décrit un autre procédé de pilotage d'un embrayage de pontage de convertisseur de couple correspondant au préambule de la revendication 1 et faisant intervenir un tiroir tout ou rien dont la position de repos est la position de dépontage.

L'invention vise à réaliser un système à la fois moins coûteux et moins encombrant, mais offrant des performances équivalentes, tout en optimisant le retour en position de dépontage.

Elle propose dans ce but une disposition constructive et un pilotage spécifiques du tiroir tout ou rien. En particulier, le tiroir tout ou rien a un fonctionnement bistable, privilégiant son retour rapide en position de dépontage.

L'invention permet ainsi de faciliter le basculement de ce tiroir entre ses deux positions.

En particulier, il est proposé qu'un déplacement très faible du tiroir tout ou rien à partir de sa position de pontage en réponse au retour à zéro de la pression modulée, déclenche le déplacement rapide de celui-ci en position de dépontage.

L'invention propose également une gestion spécifique du signal de commande de l'électrovanne responsable de la commande du pontage et de la régulation.

Conformément à l'invention, ce signal présente un premier seuil dont le franchissement dans un sens croissant pendant un temps suffisamment bref déclenche le basculement du tiroir de commande du pontage en position de pontage sans avoir d'incidence sur la régulation de la pression de pilotage de l'embrayage, et un second seuil inférieur au premier, au dessus duquel ce signal commande la régulation, sans déclencher le basculement dudit tiroir en position de dépontage.

L'invention concerne par ailleurs un dispositif de pilotage d'un embrayage de pontage de convertisseur hydrocinétique de couple de transmission automatique, comportant un tiroir tout ou rien de commande de pontage ou de dépontage du convertisseur, un tiroir de régulation de la pression de pilotage de l'embrayage de pontage en situation de pontage, et une électrovanne modulante.

Ce dispositif est caractérisé en ce que l'électrovanne commande les deux tiroirs, à l'aide de la même pression modulée.

Selon un mode de réalisation préférentiel de ce dispositif, le tiroir de commande du pontage a un fonctionnement bistable, favorisant son déplacement en position de dépontage.

D'autres caractéristiques et avantages de l'invention apparaîtront clairement à la lecture de la description suivante d'un mode de réalisation particulier de celle-ci, en se référant aux dessins annexés, sur lesquels :

- la figure 1 représente l'ensemble du système de régulation de la transmission, et notamment le système de pilotage du convertisseur pontable, en position «déponté»,

- la figure 2 représente le système de pilotage du convertisseur pontable, en position «ponté»,

- la figure 3 représente la caractéristique pression/signal de pilotage Ton, de l'électrovanne modulante, et

- la figure 4 représente le diagramme «position/signal de pilotage», du tiroir hydraulique tout ou rien.

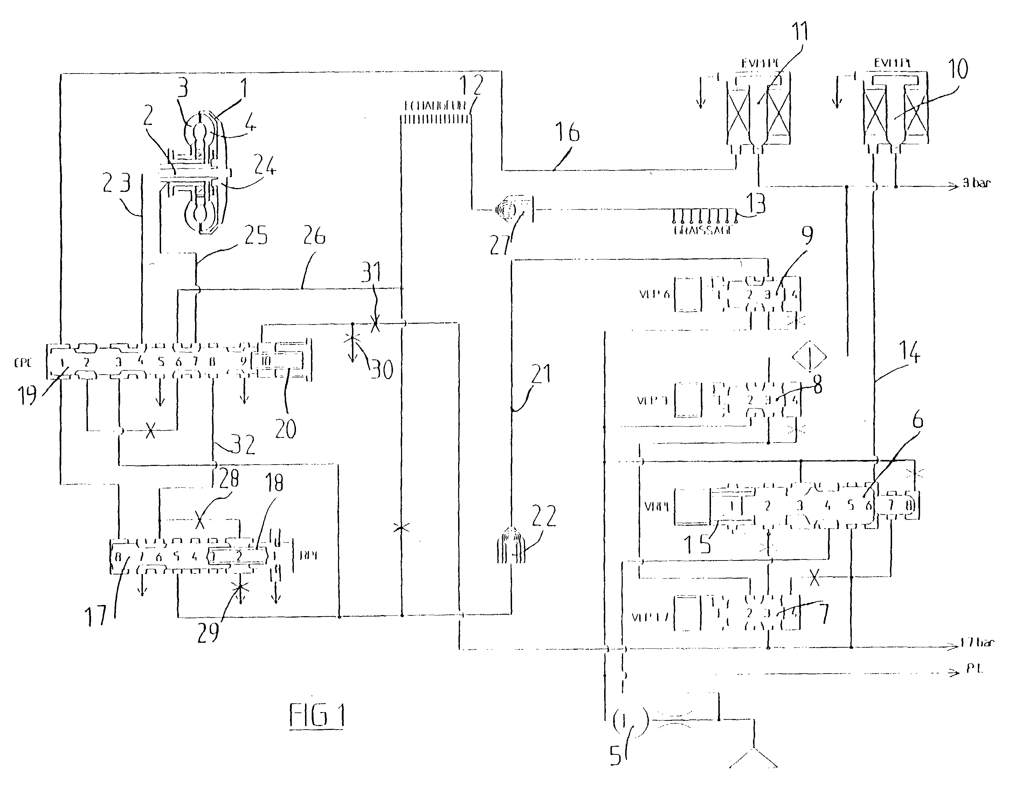

Comme indiqué ci-dessus, la figure 1 permet de comprendre l'ensemble du système de régulation électrohydraulique de la transmission, et notamment la partie spécifique au pilotage de l'embrayage de pontage (1) du convertisseur (2), embrayage qui solidarise, lorsqu'il est fermé, l'impulseur (3) et la turbine (4) du convertisseur.

Le dispositif de pilotage proposé par l'invention comporte un système de génération /régulation de pression du type proposé par la publication EP 0 187 051. On reconnaît en particulier, sur la partie droite de la figure 1, une pompe volumétrique (5) et une vanne de régulation de pression de ligne VRPL (6), mises en oeuvre selon l'enseignement de ce document avec différentes vannes de limitation de pression (7, 8 et 9) (VLP1.7, VLP3, et VLP6), de façon à générer des pressions régulées à niveaux constants croissants. A partir de la pression de ligne $P_L$, les vannes (7, 8 et 9) créent ainsi des pressions de référence $P_1$, $P_2$ et $P_3$, valant à titre indicatif 1,7 bar, 3 bar, et 6 bar.

La pression $P_1$ constitue un premier niveau de référence de pression, la pression $P_2$ constitue un second niveau de référence de pression, utilisée pour l'alimentation des électrovannes modulantes EVMPL (10) et EVMPC (11), et la pression $P_3$ constitue un troisième niveau de référence de pression, utilisée pour l'alimentation du convertisseur (2), de l'échangeur (12), et du circuit de graissage (13). EVMPL (10), alimentée par la pression $P_2$, délivre sur le canal (14), une pression modulée $P_{M1}$, variant entre 0 et $P_2$, agissant sur la surface différentielle de VRPL (6), de telle manière que, $P_{M1}$ variant entre 0 et $P_2$, $P_L$ varie entre $P_L^{max}$ et $P_2$, la valeur de $P_L^{max}$ étant fixée en ajustant la tare du ressort de rappel (15) de VRPL (6). Il en résulte que la pression délivrée par VLP6 est égale à $P_L$ si $P_2 \leq P_L \leq P_3$, et égale à $P_3$, si $P_L \geq P_3$.

En situation «déponté», la pression modulée délivrée par EVMPC (11) sur le canal (16) est nulle : il en résulte que la vanne de régulation de la pression convertisseur RPC (17) est en position de butée à gauche sous l'effet du ressort de rappel (18), de même que le tiroir tout ou rien (19), constituant la vanne de commutation de la pression convertisseur CPC, sous l'effet de son ressort de rappel (20). Dans ces conditions, la pression délivrée par VLP6 (9), transitant par le canal (21) à travers le clapet anti-retour (22), alimente le convertisseur par le canal (23), en traversant les chambres 3 et 4 de CPC (19). Le fluide de travail sous pression délivré par VLP6 (9) remplit la chambre (24) de l'embrayage de pontage, traverse l'embrayage (1), ressort du convertisseur par le canal (25), et transite par les chambres 6 et 7 de CPC (19) vers l'échangeur (12) par le canal (26) pour atteindre, à travers le clapet anti-retour (27), le circuit de graissage (13).

En situation «ponté», le tiroir tout ou rien CPC (19) a basculé vers la droite, sous l'action de la pression modulée $P_{M2}$, délivrée par EVMPC (11) sur son extrémité 1. La chambre (24) de l'embrayage de pontage est mise au zéro par le canal (23) en traversant les chambres 4 et 5 du tiroir (19). L'électrovanne EVMPC (11) délivre une pression modulée $P_{M2}$, qui, par l'intermédiaire du canal (16), agit sur la face 8 de RPC (17), et met cette dernière en situation de régulation en effet, la pression délivrée par VLP6 (9) arrive sur la chambre 5 de RPC (17) pour être partiellement, et de manière contrôlée, mise au zéro par régulation sur l'arête droite de la chambre 7 de RPC (17). L'équation de régulation s'écrit : $S.P_{M2} = T_{18} + S/\alpha.P_{conv}$, soit

$$P_{conv} = \alpha\, P_{M2} - \alpha.T_{18}/S,$$

où $P_{conv}$ est la pression d'alimentation du convertisseur, fonction linéaire de $P_{M2}$, disponible sur la chambre 6 de RPC (17), S la section de RPC 17, $T_{18}$ la tare du ressort (18) en position de régulation, et $\alpha$ est le taux d'atténuation du potentiomètre hydraulique constitué par les deux gicleurs (28 et 29). La pression $P_{conv}$, transitant par le canal (32) et les chambres 8 et 7 de CPC (19) vient, à travers le canal (25), serrer l'embrayage (1). En situation «ponté», l'embrayage (1) est donc activé par une pression $P_{conv}$, réglée en fonction de la pression $P_{M2}$, délivrée par EVMPC (11), elle-même pilotée en fonction du couple à transmettre par le calculateur électronique de la transmission (non représenté). On trouvera par ailleurs, sans peine, le cheminement de l'huile vers l'échangeur (12) et le circuit de graissage (13).

Le basculement de CPC (19) s'opère par la montée de la pression $P_{M2}$ délivrée par EVMPC (11), agissant sur l'extrémité 1 de CPC (19). En situation «déponté», CPC (19) est en équilibre entre la force $T_{20}$ exercée sur son extrémité 1 par $P_{M2}$, et la force exercée par le ressort (20), augmentée de la poussée exercée sur l'extrémité 9 de CPC (19) par la fraction $1/\beta$ de la pression $P_1$, $\beta$ étant le taux d'atténuation du potentiomètre hydraulique constitué par les gicleurs calibrés (30 et 31).

Lorsque $P_{M2} > (T_{20}/S) + (1/\beta.P_1)$ (a), CPC 19

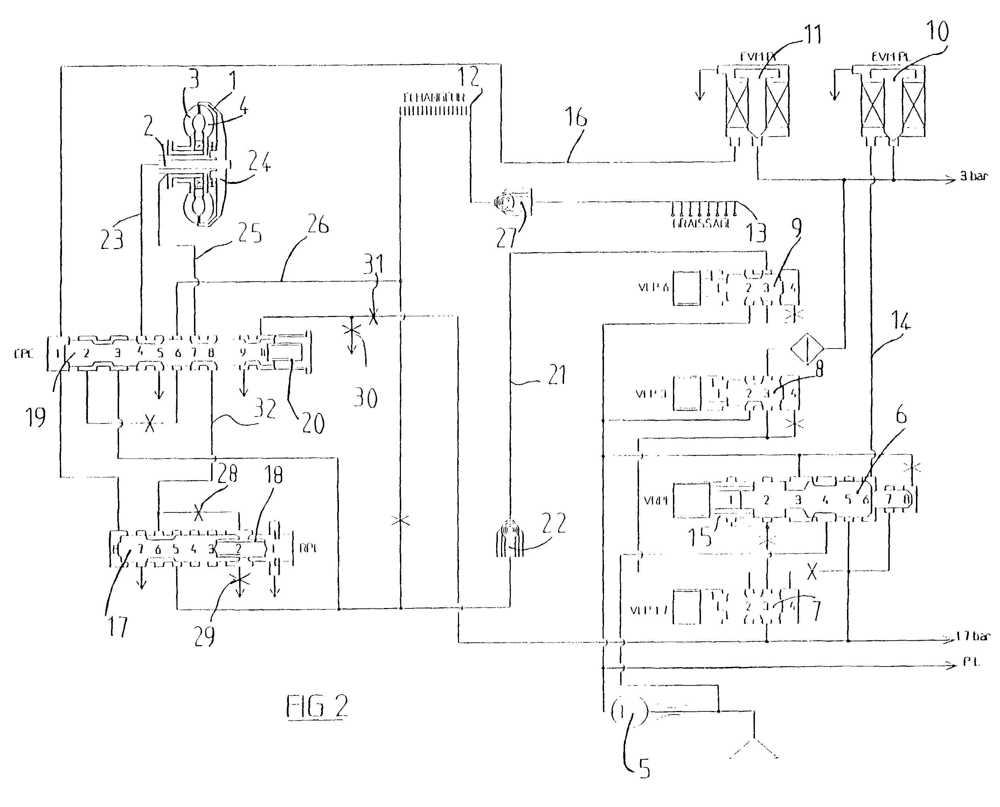

se déplace vers la droite, jusqu'à ce que la chambre 10 soit mise en communication avec la chambre 9, elle-même à la bâche : la pression tombe donc à zéro dans la chambre 10, le mouvement de CPC (19) vers la droite s'accélère alors, jusqu'à ce que CPC (19) se trouve en position en butée à droite , en situation «ponté» : l'inéquation d'équilibre de la vanne CPC (19) devient alors : $P_{M2} > T_{20}/S$ (b). Si l'on souhaite opérer un passage en situation «déponté», il suffit de ramener $P_{M2}$ à zéro. En comparant les figures 1 et 2, on s'aperçoit que le découvrement de la chambre 10 de CPC (19) en situation «ponté» est très faible (de l'ordre de quelques dixièmes de millimètre), si bien que, lors de l'opération de pontage à partir de la situation «déponté», une translation très faible de CPC (19) vers la gauche suffit à fermer la communication entre les chambres 9 et 10 : il en résulte alors la remise en pression par $1/\beta.P_1$ de la chambre 10, ce qui a pour effet une accélération du mouvement de CPC (19), vers sa position en butée, de situation «déponté». On voit donc que la conception de CPC (19), et notamment de l'alimentation de ses chambres 9 et 10, permet un fonctionnement bistable de CPC (19), qui privilégie, en raison du très faible découvrement de la chambre 10 en situation «ponté», un retour ultra-rapide vers la situation «déponté» : cette dernière particularité est tout spécialement bénéfique pour éviter le calage du moteur -calamiteux en transmission automatique ou CVT -, lors d'un blocage de roue sur coup de frein brutal.

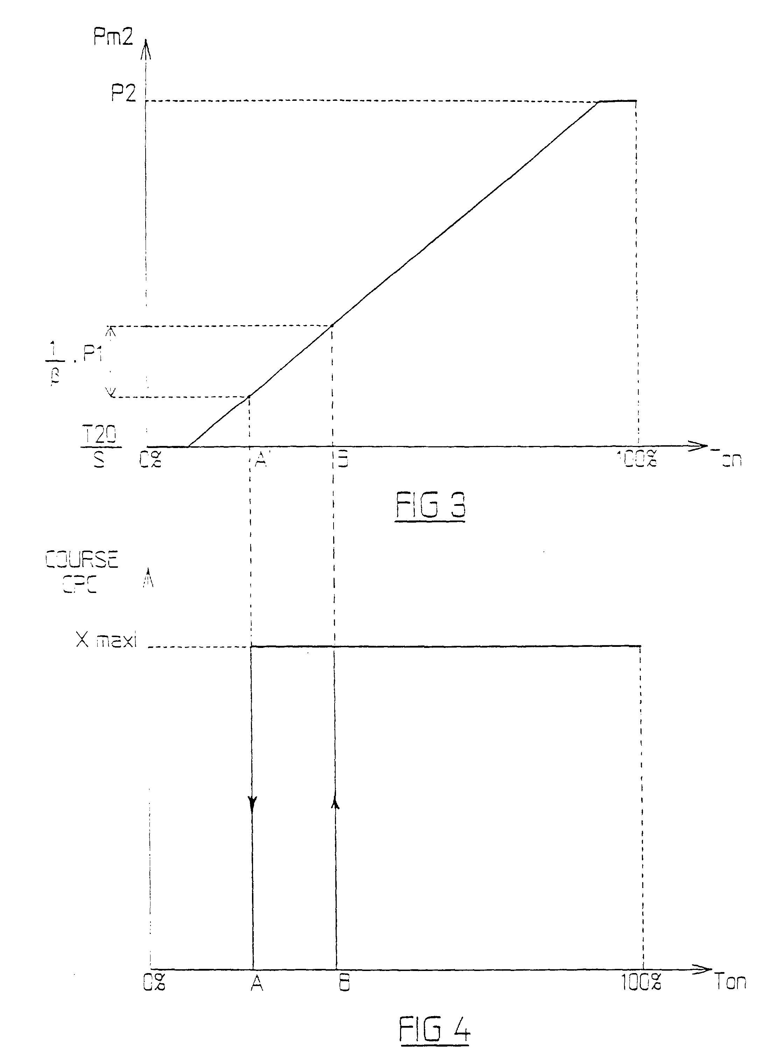

Le caractère bistable du fonctionnement de CPC (19) permet aisément de se contenter d'une seule électrovanne modulante EVMPC (11), pour assurer à la fois la manoeuvre de CPC (19), et le fonctionnement en régulation de RPC (17). En effet, si l'on se réfère à la figure 4, on voit que le fonctionnement bistable de CPC (19) est représentable par le diagramme en hystérésis course CPC (19)/signal de commande de EVMPC (11), soit X/Ton. Si ce diagramme est mis en regard avec la courbe caractéristique de EVMPC (11), $P_{M2}$/Ton, on voit qu'à partir d'une situation «déponté», caractérisée par Ton = 0 au niveau du signal de commande, on désire passer en situation «ponté», il suffit d'envoyer à EVMPC (11) un signal B < Ton < 100% pendant un temps suffisant mais très bref (suffisamment bref pour que la valeur de Ton choisie n'ait pas de conséquences perceptibles sur la régulation de $P_{conv}$), pour faire basculer CPC (19). A l'issue de ce temps, l'intervalle A - 100% est disponible pour Ton pour la régulation de $P_{conv}$ par RPC (17). Pour fixer des ordres de grandeur non limitatifs tirés de l'expérience, si $P_2$ = 3 bar, on pourra prendre $(T_{20}/S) + (1/\beta.P_1) \sim$ 1 bar et $(T_{20}/S) \sim$ 0.2 bar, soit $\beta \sim$ 2. Avec ces valeurs, on voit que $T_{20}$ est faible : en effet, le rôle du ressort (20) est essentiellement d'assurer en toutes circonstances un prépositionnement sûr de CPC (19), en situation «déponté», pour Ton = 0. Avec B $\sim$ 2, les gicleurs sont sensiblement égaux en diamètre.

Le dispositif selon l'invention permet donc d'assurer un fonctionnement bistable de CPC (19), en privilégiant un retour ultra-rapide à la situation «déponté», en se contentant d'une unique électrovanne modulante, EVMPC (11), qui commande la manoeuvre de CPC (19), tout en conservant quasiment la totalité de son domaine de fonctionnement pour pouvoir assurer une régulation fine de $P_{conv}$ : en effet, tout le segment A+ε-100% est disponible pour la régulation, c'est à dire en pratique 15-100%. En fait, les extrémités de courbe caractéristique des électrovannes modulantes sont rarement exploitables en régulation, par dispersions exagérées, manque de linéarité, etc..., si bien que la perte réelle de domaine de régulation est, en pratique, inférieure à 15%, tout en permettant malgré tout de ne pas avoir à mettre en oeuvre une électrovanne tout ou rien spécialisée dans la commande de CPC (19).

## Revendications

**1.** Procédé de pilotage d'un embrayage de pontage de convertisseur hydrocinétique de couple de transmission automatique, comportant une seule électrovanne (11) qui commande, à l'aide de la même pression modulée $P_{M2}$, le pontage ou le dépontage du convertisseur, et la régulation de la pression de pilotage de l'embrayage de pontage $P_{conv}$ en situation de pontage, la commande du pontage et du dépontage étant assurée par l'intermédiaire d'un tiroir tout ou rien (19), ayant un fonctionnement bistable privilégiant son retour rapide en position de dépontage, **caractérisé en ce qu'**un déplacement très faible du tiroir (19) à partir de sa position de pontage en réponse au retour à zéro de la pression modulée $P_{M2}$ déclenche son déplacement rapide en position de dépontage, sous l'action d'une poussée hydraulique dans cette direction.

**2.** Procédé de pilotage selon la revendication 1, **caractérisé en ce que** ladite poussée hydraulique s'exerce sur le tiroir (19) dès la disparition du découvrement d'une chambre (10) de celui-ci qui autorise, en situation de pontage, la mise à la bâche d'une pression de référence $P_1$.

**3.** Procédé de pilotage selon la revendication 1, ou 2, **caractérisé en ce que** le signal de commande Ton de l'électrovanne (11), présente un premier seuil B dont le franchissement dans un sens croissant pendant un temps suffisamment bref déclenche le basculement du tiroir (19) en position de pontage sans avoir d'incidence sur la régulation de la pression de pilotage de l'embrayage de pontage $P_{conv}$, et un second seuil A inférieur au premier, au dessus duquel ce signal commande la pression de régulation de l'embrayage de pontage $P_{conv}$, sans déclencher le basculement du tiroir (19) en position de dépontage.

**4.** Procédé de pilotage selon la revendication 1, 2 ou 3 précédentes, **caractérisé en ce que** la pression d'alimentation du convertisseur $P_{conv}$ est fonction de la pression modulée $P_{M2}$ délivrée par l'électrovanne (11).

5. Procédé de pilotage selon la revendication 4, **caractérisé en ce que** la pression d'alimentation du convertisseur $P_{conv}$ est une fonction linéaire de la pression modulée $P_{M2}$, déterminée par la relation :

$$P_{conv} = \alpha\, P_{M2} - \alpha . T_{18}/S,$$

où S est la section d'un tiroir de régulation (17) recevant $P_{M2}$, $T_{18}$ la tare du ressort (18) dudit tiroir, et $\alpha$ est le taux d'atténuation d'un potentiomètre hydraulique (28, 29) associé à ce dernier.

6. Procédé de pilotage selon l'une des revendications précédentes **caractérisé en ce** la pression $P_{M2}$ est modulée à partir d'une pression de référence $P_2 > P_1$, $P_1$ et $P_2$ étant obtenues à partir de la même pression de ligne $P_L$, par l'intermédiaire d'une vanne de régulation de pression de ligne VRPL (6) commune et de vannes de limitation de pression respectives VLP 3 (8), et VLP 1.7 (7).

7. Procédé de pilotage selon la revendication 6, **caractérisé en ce que** le convertisseur est alimenté en situation de dépontage par une pression de référence $P_3 > P_2$, obtenue par l'intermédiaire de la vanne (6) et d'une vanne de limitation de pression VLP 6 (9), ou par la pression de ligne $P_L$, selon que $P_L > P_3$, ou que $P_2 < P_L < P_3$.

8. Procédé de pilotage selon l'une des revendications précédentes, **caractérisé en ce que** la vanne (6) régule la pression de ligne $P_L$ sous l'action d'une pression modulée $P_{M1}$ délivrée par une électrovanne de modulation de pression de ligne (10), à partir de la pression de référence $P_2$.

9. Procédé de pilotage selon la revendication 8, **caractérisé en ce que** la pression de ligne $P_L$ varie entre $P_2$ et une valeur maximum $P_L^{max}$, fixée en ajustant la valeur du ressort de rappel (15) de la vanne (6).

10. Dispositif de pilotage d'un embrayage de pontage de convertisseur hydrocinétique de couple de transmission automatique, comportant un tiroir tout ou rien (19) de commande de pontage ou de dépontage du convertisseur, un tiroir de régulation (17) de la pression de pilotage de l'embrayage de pontage $P_{conv}$ en situation de pontage, et une électrovanne modulante de pression (11), qui commande les deux tiroirs (19) et, (17) à l'aide de la même pression modulée $P_{M2}$, **caractérisé en ce que** le tiroir (19) a un fonctionnement bistable favorisant son déplacement en position de dépontage et **en ce qu'**un déplacement très faible du tiroir (19) à partir de sa position de pontage en réponse au retour à zéro de la pression modulée $P_{M2}$ déclenche son déplacement rapide en position de dépontage, sous l'action d'une poussée hydraulique dans cette direction.

11. Dispositif de pilotage selon la revendication 10, **caractérisé en ce qu'**il comporte une vanne de régulation de pression de ligne (6) disposée en amont de trois vannes de limitation de pression (7, 6, 9), délivrant trois pressions de référence P1, P2, P3, telles que $P_1 < P_2 < P_3$, utilisées respectivement pour :

- exercer sur le tiroir (19) une poussée hydraulique accélérant son déplacement en position de dépontage,
- élaborer la pression modulée $P_{M2}$, et
- alimenter le convertisseur en situation de dépontage, lorsque la pression de ligne est supérieure à celle-ci.

12. Dispositif de pilotage selon la revendication 11, **caractérisé en ce que** la pression de référence $P_2$ est utilisée par une électrovanne de modulation de pression de ligne (10), reliée à la vanne de régulation (6).

**Patentansprüche**

1. Verfahren zur Steuerung einer Überbrückungskupplung für einen hydrokinetischen Drehmomentwandler in einem Automatikgetriebe, mit einem einzigen Elektroventil (11), das mittels des gleichen modulierten Drucks $P_{M2}$ den Übergang in den Zustand der Überbrückung des Wandlers oder in den Zustand ohne Überbrückung des Wandlers steuert sowie die Regelung des Steuerdrucks $P_{conv}$ der Überbrückungskupplung im Zustand der Überbrückung, wobei die Steuerung des Übergangs in den Zustand der Überbrückung oder in den Zustand ohne Überbrückung mittels eines Schiebers (19) für die Offenstellung oder für die Schließstellung erfolgt, der eine bistabile Betriebsweise aufweist, die seine schnelle Rückkehr in den Zustand ohne Überbrückung unterstützt, **dadurch gekennzeichnet, dass** eine sehr geringe Verschiebung des Schiebers (19) ausgehend von seiner Stellung der Überbrückung als Folge des Zurücksetzens des modulierten Drucks $P_{M2}$ auf Null seine schnelle Rückkehr in die Stellung ohne Überbückung auslöst durch Einwirkung einer hydraulischen Druckkraft in diese Richtung.

**2.** Verfahren zur Steuerung nach Anspruch 1, **dadurch gekennzeichnet, dass** die hydraulische Druckkraft auf den Schieber (19) einwirkt, sowie die Abdeckung einer ihrer Kammern (10) beendet wird, die in der Stellung der Überbrückung die Verbindung eines Referenzdrucks $P_1$ mit dem Sumpf herstellt.

**3.** Verfahren zur Steuerung nach Anspruch 1 oder 2, **dadurch gekennzeichnet, dass** das Steuersignal Ton des Elektroventils (11) eine erste Schelle B aufweist, deren Überschreiten in zunehmender Richtung während einer ausreichend kurzen Zeit das Umschalten des Schiebers (19) in die Stellung der Überbrückung auslöst ohne Beeinflussung der Regelung des Steuerdrucks $P_{conv}$ der Überbrückungskupplung, sowie eine zweite Schwelle aufweist, die kleiner ist als die erste Schwelle und oberhalb derer dieses Signal den Steuerdruck $P_{conv}$ der Überbrückungskupplung regelt ohne eine Umschaltung des Schiebers in die Position ohne Überbrückung auszulösen.

**4.** Verfahren zur Steuerung nach einem der vorhergehenden Ansprüchen 1, 2 oder 3, **dadurch gekennzeichnet, dass** der Versorgungsdruck $P_{conv}$ des Wandlers eine Funktion des modulierten Drucks $P_{M2}$ ist, der von dem Elektroventil (11) erzeugt wird.

**5.** Verfahren zur Steuerung nach Anspruch 4, **dadurch gekennzeichnet, dass** der Versorgungsdruck $P_{conv}$ des Wandlers eine lineare Funktion des modulierten Drucks $P_{M2}$ ist, der durch die Gleichung bestimmt ist:

$$P_{conv} = \alpha \, P_{M2} - \alpha.T_{18}/S$$

wobei S der Querschnitt eines Steuerschiebers (17) ist, dem $P_{M2}$ zugeführt wird, $T_{18}$ die Vorspannung der Feder (18) dieses Schiebers ist und $\alpha$ der Abschwächungsgrad eines dem letzteren zugeordneten hydraulischen Potentiometers (28,29) ist.

**6.** Verfahren zur Steuerung nach einem der vorhergehenden Ansprüche, **dadurch gekennzeichnet, dass** der Druck $P_{M2}$ moduliert wird ausgehend von einem Referenzdruck $P_2 > P_1$,
wobei $P_1$ und $P_2$ erhalten werden ausgehend vom selben Leitungsdruck $P_L$ mittels eines gemeinsamen Regelventils VRPL (6) für den Leitungsdruck und
Druckbegrenzungsventilen VLP3 (8) bzw. VLP1.7 (7).

**7.** Verfahren zur Steuerung nach Anspruch 6, **dadurch gekennzeichnet, dass** der Wandler im Zustand ohne Überbrückung mit einem Referenzdruck $P_3 > P_2$ versorgt wird, der mittels des Ventils (6) und des Druckbegrenzungsventils VLP 6 (9) erzeugt wird oder mit einem Leitungsdruck $P_L$, je nachdem, ob $P_L > P_3$ oder $P_2 < P_L < P_3$ ist.

**8.** Verfahren zur Steuerung nach einem der vorhergehenden Ansprüche, **dadurch gekennzeichnet, dass** das Ventil (6) den Leitungsdruck $P_L$ regelt unter der Einwirkung eines modulierten Drucks $P_{M1}$, der vom Elektroventil (10) für die Modulation des Leitungsdrucks erzeugt wird ausgehend von dem Referenzdruck $P_2$.

**9.** Verfahren zur Steuerung nach Anspruch 8, **dadurch gekennzeichnet, dass** der Leitungsdruck $P_L$ zwischen $P_2$ und einem festen Maximalwert $P_1^{max}$ variierbar ist durch Einstellung der Rückholfeder (15) des Ventils )6).

**10.** Vorrichtung zur Steuerung der Überbrückungskupplung eines hydrokinetischen Drehmomentwandlers für ein Automatikgetriebe, mit einem Schieber (19) für die Offenstellung oder die Schließstellung zum Umschalten von der Stellung mit Überbrückung in die Stellung ohne Überbrückung des Wandlers, mit einem Steuerschieber (17) für die Regelung des Steuerdrucks $P_{conv}$ der Überbrückungskupplung in der Stellung mit Überbrückung und mit einem modulierenden Elektroventil (11) für den Druck, das die beiden Schieber (19) und (17) steuert mittels desselben modulierten Drucks $P_{M2}$, **dadurch gekennzeichnet, dass** der Schieber (19) eine bistabile Betriebsweise aufweist, das seine Verschiebung in die Stellung ohne Überbrückung unterstützt und dass eine sehr geringe Verschiebung des Schiebers (19) ausgehend von seiner Stellung mit Überbrückung als Folge einer Rückkehr zu Null des modulierten Drucks $P_{M2}$ seine schnelle Verschiebung in die Stellung ohne Überbrückung auslöst, ohne dass in dieser Richtung eine hydraulische Druckkraft wirksam ist.

**11.** Vorrichtung zur Steuerung nach Anspruch 10, **dadurch gekennzeichnet, dass** sie ein Regelventil (6) für den Leitungsdruck aufweist, das stromaufwärts der drei Druckbegrenzungsventile (7, 6, 9) angeordnet ist, die drei Referenzdrücke $P_1$, $P_2$, $P_3$ erzeugen, wobei $P_1 < P_2 < P_3$ ist, die verwendet werden für:

die Ausübung einer hydraulischen Druckkraft auf den Schieber (19) zur Beschleunigung seiner Verschiebung in Richtung der Stellung ohne Überbrückung,
das Erzeugen des modulierten Drucks $P_{M2}$ und die Versorgung des Wandlers in der Stellung ohne Überbrückung, wenn der Leitungsdruck grösser als dieser ist.

**12.** Vorrichtung zur Steuerung nach Anspruch 11, **dadurch gekennzeichnet, dass** der Referenzdruck $P_2$ von einem Elektroventil (10) verwendet wird zur Modulation des Leitungsdrucks, das mit dem Regelventil (6) verbunden ist.

## Claims

**1.** A method for piloting a bridging clutch of a hydrokinetic torque converter of an automatic transmission, comprising a single electrovalve (11) which controls, by means of the same modulated pressure $P_{M2}$, the bridging or non-bridging of the converter, and the regulation of the piloting pressure of the bridging clutch $P_{conv}$ in a bridging situation, the control of the bridging and non-bridging being ensured by means of an all-or-nothing valve (19) having a bistable operation giving priority to its rapid return to a non-bridging position, **characterised in that** a very small displacement of the valve (19) from its bridging position in response to the return to zero of the modulated pressure $P_{M2}$ triggers its rapid displacement into the non-bridging position under the effect of a hydraulic thrust in this direction.

**2.** A piloting method as claimed in claim 1, **characterised in that** the hydraulic thrust is exerted on the valve (19) from the disappearance of the opening of a chamber (10) thereof which authorises, in a bridging situation, the provision of a reference pressure $P_1$ to the tank.

**3.** A piloting method as claimed in claim 1 or 2, **characterised in that** the control signal Ton of the electrovalve (11) has a first threshold B which, when exceeded in an increasing direction for a sufficiently short time, triggers the tilting of the valve (19) into the bridging position without having an impact on the regulation of the piloting pressure of the bridging clutch $P_{conv}$ and a second threshold A lower than the first, above which this signal controls the regulation pressure of the bridging clutch $P_{conv}$ without triggering the tilting of the valve (19) into the non-bridging position.

**4.** A piloting method as claimed in claims 1, 2, or 3, **characterised in that** the supply pressure of the converter $P_{conv}$ is a function of the modulated pressure $P_{M2}$ supplied by the electrovalve (11).

**5.** A piloting method as claimed in claim 4, **characterised in that** the supply pressure of the converter $P_{conv}$ is a linear function of the modulated pressure $P_{M2}$ determined by the relationship:

$$P_{conv} = \alpha P_{M2} - \alpha . T_{18}/S$$

in which S is the section of a regulation valve (17) receiving $P_{M2}$, $T_{18}$ is the tare of the spring (18) of the valve, and $\alpha$ is the rate of attenuation of a hydraulic potentiometer (28, 29) associated with the latter.

**6.** A piloting method as claimed in one of the preceding claims, **characterised in that** the pressure $P_{M2}$ is modulated from a reference pressure $P_2 > P_1$, $P_1$ and $P_2$ being obtained from the same line pressure $P_L$ by means of a common line pressure regulation valve VRPL (6) and respective pressure limiting valves VLP3 (8) and VLP 1.7 (7).

**7.** A piloting method as claimed in claim 6, **characterised in that** the converter is supplied, in a non-bridging situation, by a reference pressure $P_3 > P_2$ obtained by means of the valve (6) and a pressure limiting valve VLP 6 (9) or by the line pressure $P_L$ depending on whether $P_L > P_3$ or $P_2 < P_L < P_3$.

**8.** A piloting method as claimed in one of the preceding claims, **characterised in that** the valve (6) regulates the line pressure $P_L$ under the effect of a modulated pressure $P_{M1}$ supplied by a line pressure modulation electrovalve (10) from the reference pressure $P_2$.

**9.** A piloting method as claimed in claim 8, **characterised in that** the line pressure $P_L$ varies between $P_2$ and a maximum value $P_L^{max}$ set by adjusting the value of the recall spring (15) of the valve (6).

**10.** A device for piloting a bridging clutch for a hydrokinetic torque converter of an automatic transmission, comprising an all-or-nothing valve (19) controlling the bridging or non-bridging of the converter, a valve (17) regulating the piloting pressure of the bridging clutch $P_{conv}$ in a bridging situation, and a pressure modulating electrovalve (11) which controls the two valves (19) and (17) by means of the same modulated pressure $P_{M2}$, **characterised in that** the valve (19) has a bistable operation favouring its displacement into the bridging position, and **in that** a very small displacement of the valve (19) from its bridging position in response to the return to zero of the modulated pressure $P_{M2}$ triggers its rapid displacement into the non-bridging position, under the effect of a hydraulic thrust in this direction.

**11.** A piloting device as claimed in claim 10, **characterised in that** it comprises a line pressure regulation valve (6) disposed upstream of three pressure limiting valves (7, 6, 9) supplying three reference pressures P1, P2, P3 such that $P_1 < P_2 < P_3$ used respectively to:

- exert a hydraulic thrust on the valve (19) accelerating its displacement into the non-bridging position,

- formulate the modulated pressure $P_{M2}$ and
- supply the converter in the non-bridging position, when the line pressure is greater than that pressure.

12. A piloting device as claimed in claim 11, **characterised in that** the reference pressure $P_2$ is used by a line pressure modulation electrovalve (10) connected to the regulation valve (6).

FIG1

FIG 2

FIG 3

FIG 4